# EUROPEAN PATENT APPLICATION

(11) **EP 4 851 198 A1**
(43) Date of publication of application: **09.12.2026**
(21) Application number: 25748336.2
(22) Date of filing: 16.01.2025
(51) Int. Cl.: C08F 2/18, C08F 20/06

(54) **METHOD FOR PRODUCING WATER-ABSORBENT RESIN PARTICLES AND WATER-ABSORBENT RESIN PARTICLES**

(30) Priority: 29.01.2024 JP 2024011358
(71) Applicant: Sumitomo Seika Chemicals Co., Ltd., Kako-gun, Hyogo 675-0145 (JP)
(72) Inventor: NISHI, Hideyuki, Himeji-shi, Hyogo 672-8076 (JP)
(74) Representative: Mewburn Ellis LLP
(86) International application number: PCT/JP2025/001230
(87) International publication number: WO 2025/164340

(57) **Abstract**

There is provided a method for producing water-absorbent resin particles comprising the step of subjecting a water-soluble ethylenically unsaturated monomer to reversed-phase suspension polymerization in a hydrocarbon dispersion medium to obtain polymer particles, the method allowing water-absorbent resin particles having a narrow particle size distribution to be obtained. A method for producing water-absorbent resin particles comprising the step of subjecting a water-soluble ethylenically unsaturated monomer to reversed-phase suspension polymerization in a hydrocarbon dispersion medium to obtain polymer particles, wherein the reversed-phase suspension polymerization is performed in two or more multiple stages, wherein the method comprises the step of agglomerating the polymer particles in the presence of a dispersion stabilizer, and wherein two or more (poly)glycerol fatty acid esters having different precipitation temperatures when in the form of a 0.46% by mass heptane solution are used as the dispersion stabilizer.

## Description

### Technical Field

The present invention relates to a method for producing water-absorbent resin particles, water-absorbent resin particles, an absorbent material, and an absorbent article; and more particularly relates to a method for producing water-absorbent resin particles that constitute an absorbent material suitably used for hygienic materials, such as disposable diapers, sanitary napkins, and incontinence pads, and to water-absorbent resin particles.

### Background Art

In recent years, water-absorbent resin particles have been widely used in the field of hygienic materials, such as disposable diapers, sanitary napkins, and incontinence pads.

As such water-absorbent resin particles, crosslinked products of polymers of a water-soluble ethylenically unsaturated monomer, more specifically, crosslinked products of polymers of partially neutralized polyacrylic acid, have been proposed as preferable water-absorbent resin particles, because of many advantages: for example, they have good water absorption capacity; acrylic acid used as a raw material is readily industrially available, and thus, they can be produced at low cost with uniform quality; additionally, they are resistant to decomposition or degradation (see, for example, Patent Literature 1).

An absorbent article, such as a disposable diaper, a sanitary napkin, or an incontinence pad, is composed of an absorbent material that is positioned mainly in a central portion to absorb and retain a body liquid, such as urine or menses excreted from the body, a liquid-permeable front sheet (top sheet) positioned on the side of the absorbent article that is brought into contact with the body, and a liquid-impermeable rear sheet (back sheet) positioned opposite to the side that is brought into contact with the body. The absorbent material is typically composed of hydrophilic fibers, such as pulp, and water-absorbent resin particles.

### Citation List

### Patent Literature

Patent Literature 1: JP-A-H3-227301

### Summary of Invention

### Technical Problem

Water-absorbent resin particles can be produced, for example, by subjecting a water-soluble ethylenically unsaturated monomer to reversed-phase suspension polymerization in a hydrocarbon dispersion medium to obtain polymer particles.

A main object of the present invention is to provide a method for producing water-absorbent resin particles comprising the step of subjecting a water-soluble ethylenically unsaturated monomer to reversed-phase suspension polymerization in a hydrocarbon dispersion medium to obtain polymer particles, the method allowing water-absorbent resin particles having a narrow particle size distribution to be obtained. Another object of the present invention is to provide water-absorbent resin particles having a narrow particle size distribution.

### Solution to Problem

The present inventor conducted extensive research to solve the above problem. As a result, the inventor found that water-absorbent resin particles having a narrow particle size distribution can be obtained according to a method for producing water-absorbent resin particles comprising the step of subjecting a water-soluble ethylenically unsaturated monomer to reversed-phase suspension polymerization in a hydrocarbon dispersion medium to obtain polymer particles, wherein the reversed-phase suspension polymerization is performed in two or more multiple stages, wherein the method comprises the step of agglomerating the polymer particles in the presence of a dispersion stabilizer, and wherein two or more (poly)glycerol fatty acid esters having different precipitation temperatures when in the form of a 0.46% by mass heptane solution are used as the dispersion stabilizer. The present invention has been accomplished as a result of further research based on this finding.

In summary, the present invention provides aspects of the invention comprising the following features:
Item 1. A method for producing water-absorbent resin particles comprising the step of subjecting a water-soluble ethylenically unsaturated monomer to reversed-phase suspension polymerization in a hydrocarbon dispersion medium to obtain polymer particles,
   wherein the reversed-phase suspension polymerization is performed in two or more multiple stages,
   wherein the method comprises the step of agglomerating the polymer particles in the presence of a dispersion stabilizer, and
   wherein two or more (poly)glycerol fatty acid esters having different precipitation temperatures when in the form of a 0.46% by mass heptane solution are used as the dispersion stabilizer.
Item 2. The method according to Item 1, wherein a difference between the precipitation temperatures of a (poly)glycerol fatty acid ester having a highest precipitation temperature and a (poly)glycerol fatty acid ester having a lowest precipitation temperature of the two or more (poly)glycerol fatty acid esters is 15°C or less.
Item 3. The method according to Item 1 or 2, wherein at least one of the (poly)glycerol fatty acid esters is hexaglyceryl tristearate, and
   wherein an amount of the hexaglyceryl tristearate used is in a range of 0.2 parts by mass or more and 4.0 parts by mass or less per 100 parts by mass of the water-soluble ethylenically unsaturated monomer used in first-stage polymerization.
Item 4. The method according to Item 3, wherein the dispersion stabilizer contains the hexaglyceryl tristearate and at least one of a (poly)glycerol fatty acid ester having a precipitation temperature higher than that of the hexaglyceryl tristearate and a (poly)glycerol fatty acid ester having a precipitation temperature lower than that of the hexaglyceryl tristearate, and
   wherein an amount of each of the (poly)glycerol fatty acid ester having a precipitation temperature higher than that of the hexaglyceryl tristearate and the (poly)glycerol fatty acid ester having a precipitation temperature lower than that of the hexaglyceryl tristearate used is in a range of more than 0 parts by mass and 3.0 parts by mass or less per part by mass of the hexaglyceryl tristearate.
Item 5. The method according to Item 4, wherein the dispersion stabilizer contains the hexaglyceryl tristearate, the (poly)glycerol fatty acid ester having a precipitation temperature higher than that of the hexaglyceryl tristearate, and the (poly)glycerol fatty acid ester having a precipitation temperature lower than that of the hexaglyceryl tristearate, and
   wherein the amount of each of the (poly)glycerol fatty acid ester having a precipitation temperature higher than that of the hexaglyceryl tristearate and the (poly)glycerol fatty acid ester having a precipitation temperature lower than that of the hexaglyceryl tristearate used is more than 0 parts by mass and 2.0 parts by mass or less per part by mass of the hexaglyceryl tristearate.
Item 6. Water-absorbent resin particles comprising polymer particles containing a water-soluble ethylenically unsaturated monomer as a monomer unit,
   wherein the water-absorbent resin particles have a particle size distribution uniformity of 2.5 or less and contain (poly)glycerol fatty acid esters near surfaces of the water-absorbent resin particles.

### Advantageous Effects of Invention

According to the present invention, it is possible to provide a method for producing water-absorbent resin particles comprising the step of subjecting a water-soluble ethylenically unsaturated monomer to reversed-phase suspension polymerization in a hydrocarbon dispersion medium to obtain polymer particles, the method allowing water-absorbent resin particles having a narrow particle size distribution to be obtained. Furthermore, according to the present invention, it is also possible to provide water-absorbent resin particles having a narrow particle size distribution.

### Description of Embodiments

As used herein, the term "comprising" includes "consisting essentially of" and "consisting of". As used herein, the term "(meth)acrylic" refers to "acrylic or methacrylic", the term "(meth)acrylate" refers to "acrylate or methacrylate", and the term "(poly)" means both cases with and without the prefix "poly". As used herein, the term "water-soluble" refers to having a water solubility of 5% by mass or more at 25°C.

As used herein, the term "near surfaces" of the water-absorbent resin particles refers to outermost surfaces of the water-absorbent resin particles and a region from the outermost surfaces to a depth of approximately 30 µm toward the center of the particles.

As used herein, values combined with "to" refer to the numerical range including the values before and after "to" as the lower and upper limits. When a plurality of lower limits and a plurality of upper limits are mentioned separately, any lower limit and any upper limit may be selected and combined with "to".

### 1. Method for Producing Water-Absorbent Resin Particles

The method for producing water-absorbent resin particles of the present invention is a method for producing water-absorbent resin particles comprising the step of subjecting a water-soluble ethylenically unsaturated monomer to reversed-phase suspension polymerization in a hydrocarbon dispersion medium to obtain polymer particles (polymerization step).

In the method for producing water-absorbent resin particles of the present invention, the reversed-phase suspension polymerization is performed in two or more multiple stages. Moreover, the method of the present invention comprises the step of agglomerating the polymer particles in the presence of a dispersion stabilizer. Furthermore, in the method of the present invention, two or more (poly)glycerol fatty acid esters having different precipitation temperatures when in the form of a 0.46% by mass heptane solution are used as the dispersion stabilizer.

Because of these features, the method for producing water-absorbent resin particles of the present invention can suitably produce water-absorbent resin particles having a narrow particle size distribution. The method for producing water-absorbent resin particles of the present invention will be described below in detail.

### <Polymerization Step>

The polymerization step is the step of polymerizing a water-soluble ethylenically unsaturated monomer using a reversed-phase suspension polymerization method to obtain polymer particles. In the reversed-phase suspension polymerization method, polymerization is performed by heating the water-soluble ethylenically unsaturated monomer with stirring in a hydrocarbon dispersion medium. In the polymerization step, an internal-crosslinking agent may be optionally added to the water-soluble ethylenically unsaturated monomer to obtain crosslinked polymer particles having an internal-crosslinked structure. An example of the polymerization step will be described below.

### [Water-Soluble Ethylenically Unsaturated Monomer]

Examples of the water-soluble ethylenically unsaturated monomer include (meth)acrylic acid ("acrylic" and "methacrylic" are herein collectively referred to as "(meth)acrylic"; the same applies below) and salts thereof; 2-(meth)acrylamido-2-methylpropanesulfonic acid and salts thereof; nonionic monomers, such as (meth)acrylamide, N,N-dimethyl(meth)acrylamide, 2-hydroxyethyl (meth)acrylate, N-methylol(meth)acrylamide, and polyethylene glycol mono(meth)acrylate; and amino group-containing unsaturated monomers, such as N,N-diethylaminoethyl (meth)acrylate, N,N-diethylaminopropyl (meth)acrylate, and diethylaminopropyl (meth)acrylamide, as well as quaternary compounds thereof. Preferred among these water-soluble ethylenically unsaturated monomers are (meth)acrylic acid and salts thereof, (meth)acrylamide, and N,N-dimethylacrylamide, and more preferred are (meth)acrylic acid and salts thereof, because they are readily industrially available, for example. These water-soluble ethylenically unsaturated monomers may be used alone or in combinations of two or more.

Among these water-soluble ethylenically unsaturated monomers, acrylic acid and salts thereof are widely used as raw materials of water-absorbent resin particles. Copolymers of acrylic acid and/or salts thereof with other water-soluble ethylenically unsaturated monomers as mentioned above may also be used. In this case, acrylic acid and/or a salt thereof as a main water-soluble ethylenically unsaturated monomer is preferably used in an amount of 70 to 100 mol% based on the total amount of water-soluble ethylenically unsaturated monomers.

The water-soluble ethylenically unsaturated monomer as an aqueous solution may be dispersed in a hydrocarbon dispersion medium and then subjected to reversed-phase suspension polymerization. When the water-soluble ethylenically unsaturated monomer is in the form of an aqueous solution, the dispersion efficiency in the hydrocarbon dispersion medium can be increased. The concentration of the water-soluble ethylenically unsaturated monomer in the aqueous solution is preferably in the range of 20% by mass to not more than the saturated concentration. The concentration of the water-soluble ethylenically unsaturated monomer is more preferably 55% by mass or less, still more preferably 50% by mass or less, and even more preferably 45% by mass or less. On the other hand, the concentration of the water-soluble ethylenically unsaturated monomer is more preferably 25% by mass or more, still more preferably 28% by mass or more, and even more preferably 30% by mass or more.

When the water-soluble ethylenically unsaturated monomer has an acid group such as (meth)acrylic acid or 2-(meth)acrylamido-2-methylpropanesulfonic acid, the acid group may be optionally neutralized with an alkaline neutralizing agent, before the water-soluble ethylenically unsaturated monomer is used. Examples of such alkaline neutralizing agents include alkali metal salts, such as sodium hydroxide, sodium carbonate, sodium hydrogen carbonate, potassium hydroxide, and potassium carbonate; and ammonia. These alkaline neutralizing agents may be used in the form of an aqueous solution to facilitate the neutralization process. The above-mentioned alkaline neutralizing agents may be used alone or in combinations of two or more.

The neutralization degree of the water-soluble ethylenically unsaturated monomer with an alkaline neutralizing agent, calculated as the neutralization degree of all acid groups in the water-soluble ethylenically unsaturated monomer, is preferably 40 to 100 mol%, more preferably 50 to 90 mol%, still more preferably 60 to 85 mol%, and even more preferably 70 to 80 mol%.

### [Radical Polymerization Initiator]

Examples of the radical polymerization initiator added in the polymerization step include persulfates, such as potassium persulfate, ammonium persulfate, and sodium persulfate; peroxides, such as methyl ethyl ketone peroxide, methyl isobutyl ketone peroxide, di-t-butyl peroxide, t-butyl cumyl peroxide, t-butyl peroxyacetate, t-butyl peroxyisobutyrate, t-butyl peroxypivalate, and hydrogen peroxide; and azo compounds, such as 2,2'-azobis(2-amidinopropane) dihydrochloride, 2,2'-azobis[2-(N-phenylamidino)propane] dihydrochloride, 2,2'-azobis[2-(N-allylamidino)propane] dihydrochloride, 2,2'-azobis{2-[1-(2-hydroxyethyl)-2-imidazolin-2-yl]propane} dihydrochloride, 2,2'-azobis{2-methyl-N-[1,1-bis(hydroxymethyl)-2-hydroxyethyl]propionamide}, 2,2'-azobis[2-methyl-N-(2-hydroxyethyl)-propionamide], and 4,4'-azobis(4-cyanovaleric acid). Preferred among these radical polymerization initiators are potassium persulfate, ammonium persulfate, sodium persulfate, and 2,2'-azobis(2-amidinopropane) dihydrochloride, because they are readily available and easy to handle. These radical polymerization initiators may be used alone or in combinations of two or more. The above-mentioned radical polymerization initiators may also be used in combination with a reducing agent, such as sodium sulfite, sodium hydrogensulfite, ferrous sulfate, or L-ascorbic acid, and used as a redox polymerization initiator.

The amount of the radical polymerization initiator used is, for example, 0.00005 to 0.01 mol per mole of the water-soluble ethylenically unsaturated monomer. When the radical polymerization initiator is used in the above-defined range of amounts, the occurrence of an abrupt polymerization reaction can be avoided, and the polymerization reaction can be completed in an appropriate period of time.

### [Internal-Crosslinking Agent]

Examples of the internal-crosslinking agent include those that can crosslink the polymer of the water-soluble ethylenically unsaturated monomer to be used, for example: unsaturated polyesters obtained by reacting polyols, such as diols and triols, e.g., (poly)ethylene glycol ["(poly)" means both cases with and without the prefix "poly"; the same applies below], (poly)propylene glycol, 1,4-butanediol, 1,6-hexanediol, trimethylolpropane, and (poly)glycerin, with unsaturated acids, such as (meth)acrylic acid, maleic acid, and fumaric acid; bisacrylamides, such as N,N-methylenebisacrylamide; di or tri(meth)acrylic acid esters obtained by reacting polyepoxides with (meth)acrylic acid; carbamyl di(meth)acrylates obtained by reacting polyisocyanates, such as tolylene diisocyanate and hexamethylene diisocyanate, with hydroxyethyl (meth)acrylate; compounds having two or more polymerizable unsaturated groups, such as allylated starch, allylated cellulose, diallyl phthalate, N,N',N"-triallyl isocyanurate, and divinylbenzene; polyglycidyl compounds, such as diglycidyl compounds, e.g., (poly)ethylene glycol diglycidyl ether, (poly)propylene glycol diglycidyl ether, and (poly)glycerin diglycidyl ether, and triglycidyl compounds; epihalohydrin compounds, such as epichlorohydrin, epibromohydrin, and α-methylepichlorohydrin; compounds having two or more reactive functional groups, such as isocyanate compounds, e.g., 2,4-tolylene diisocyanate and hexamethylene diisocyanate; and oxetane compounds, such as 3-methyl-3-oxetanemethanol, 3-ethyl-3-oxetanemethanol, 3-butyl-3-oxetanemethanol, 3-methyl-3-oxetaneethanol, 3-ethyl-3-oxetaneethanol, and 3-butyl-3-oxetaneethanol. Among these internal-crosslinking agents, polyethylene glycol diacrylate, trimethylolpropane triacrylate, (poly)ethylene glycol diglycidyl ether, (poly)propylene glycol diglycidyl ether, and (poly)glycerin diglycidyl ether are preferably used. These internal-crosslinking agents may be used alone or in combinations of two or more.

The amount of the internal-crosslinking agent used is preferably 0.000001 to 0.02 mol, more preferably 0.00001 to 0.01 mol, still more preferably 0.00001 to 0.005 mol, and even more preferably 0.00005 to 0.002 mol, per mole of the water-soluble ethylenically unsaturated monomer.

### [Hydrocarbon Dispersion Medium]

Examples of the hydrocarbon dispersion medium include C₆₋₈ aliphatic hydrocarbons, such as n-hexane, n-heptane, 2-methylhexane, 3-methylhexane, 2,3-dimethylpentane, 3-ethylpentane, and n-octane; alicyclic hydrocarbons, such as cyclohexane, methylcyclohexane, cyclopentane, methylcyclopentane, trans-1,2-dimethylcyclopentane, cis-1,3-dimethylcyclopentane, and trans-1,3-dimethylcyclopentane; and aromatic hydrocarbons, such as benzene, toluene, and xylene. Among these hydrocarbon dispersion media, n-hexane, n-heptane, and cyclohexane, which are readily industrially available, stable in quality, and inexpensive, are particularly suitably used. These hydrocarbon dispersion media may be used alone or in combinations of two or more. Favorable results are also obtained using a commercially available mixture of hydrocarbon dispersion media, such as Exxsol Heptane (manufactured by Exxon Mobil Corporation; containing 75 to 85% by mass of heptane and its isomeric hydrocarbons).

The amount of the hydrocarbon dispersion medium used is preferably 100 to 1500 parts by mass, and more preferably 200 to 1400 parts by mass, per 100 parts by mass of the first-stage water-soluble ethylenically unsaturated monomer, in view of homogeneously dispersing the water-soluble ethylenically unsaturated monomer, and facilitating control of the polymerization temperature. As described below, in the present invention, the reversed-phase suspension polymerization is performed in two or more multiple stages. The above-mentioned first-stage polymerization refers to the first-stage polymerization reaction in multi-stage polymerization (the same applies below).

### [Dispersion Stabilizer]

The method of the present invention comprises the step of agglomerating the polymer particles in the presence of a dispersion stabilizer, wherein two or more (poly)glycerol fatty acid esters having different precipitation temperatures when in the form of a 0.46% by mass heptane solution are used as the dispersion stabilizer.

The precipitation temperatures of the (poly)glycerol fatty acid esters when in the form of a 0.46% by mass heptane solution (hereinafter, sometimes simply referred to as "precipitation temperatures") are measured using the method described in the Examples section.

In view of more suitably achieving the effect of the present invention, a difference between the precipitation temperatures of a (poly)glycerol fatty acid ester having a highest precipitation temperature and a (poly)glycerol fatty acid ester having a lowest precipitation temperature of the two or more (poly)glycerol fatty acid esters is 15°C or less, more preferably 10°C or less, and still more preferably 6°C or less; and is preferably 1°C or more, more preferably 2°C or more, and still more preferably 3°C or more. Preferred ranges include from 1 to 15°C, from 1 to 10°C, from 1 to 6°C, from 2 to 15°C, from 2 to 10°C, from 2 to 6°C, from 3 to 15°C, from 3 to 10°C, and from 3 to 6°C.

The precipitation temperatures of the (poly)glycerol fatty acid esters are preferably 55°C or less, more preferably 45°C or less, still more preferably 40°C or less, and even more preferably 35°C or less; and are preferably 0°C or more, more preferably 10°C or more, still more preferably 15°C or more, and even more preferably 20°C or more. Preferred ranges include from 0 to 55°C, from 0 to 45°C, from 0 to 40°C, from 0 to 35°C, from 10 to 55°C, from 10 to 45°C, from 10 to 40°C, from 10 to 35°C, from 15 to 55°C, from 15 to 45°C, from 15 to 40°C, from 15 to 35°C, from 20 to 55°C, from 20 to 45°C, from 20 to 40°C, and from 20 to 35°C.

The (poly)glycerol fatty acid esters can reduce coloration of the water-absorbent resin particles due to heating. Specific examples of the (poly)glycerol fatty acid esters include monoglyceryl monostearate, tetraglyceryl monostearate, tetraglyceryl tristearate, tetrapolyglyceryl pentastearate, hexaglyceryl tristearate, decaglyceryl tristearate, decaglyceryl decastearate, decaglyceryl pentastearate, decaglyceryl dodecabehenate, decaglyceryl pentaisostearate, decaglyceryl pentaoleate, decaglyceryl pentapalmitate, decaglyceryl pentalaurate, decaglyceryl pentahydroxystearate, and hexaglyceryl condensed ricinoleate. In the present invention, two or more of these (poly)glycerol fatty acid esters are preferably used. More preferably, hexaglyceryl tristearate is preferably used as one of the two or more (poly)glycerol fatty acid esters.

A total amount of the two or more (poly)glycerol fatty acid esters used per 100 parts by mass of the water-soluble ethylenically unsaturated monomer used in the first-stage polymerization of the reversed-phase suspension polymerization is preferably 0.2 parts by mass or more, more preferably 0.9 parts by mass or more, still more preferably 1.3 parts by mass or more, and even more preferably 1.4 parts by mass or more; and is preferably 12.0 parts by mass or less, more preferably 4.0 parts by mass or less, still more preferably 2.0 parts by mass or less, and even more preferably 1.7 parts by mass or less. Preferred ranges include from 0.2 to 12.0 parts by mass, from 0.2 to 4.0 parts by mass, from 0.2 to 2.0 parts by mass, from 0.2 to 1.7 parts by mass, from 0.9 to 12.0 parts by mass, from 0.9 to 4.0 parts by mass, from 0.9 to 2.0 parts by mass, from 0.9 to 1.7 parts by mass, from 1.3 to 12.0 parts by mass, from 1.3 to 4.0 parts by mass, from 1.3 to 2.0 parts by mass, from 1.3 to 1.7 parts by mass, from 1.4 to 12.0 parts by mass, from 1.4 to 4.0 parts by mass, from 1.4 to 2.0 parts by mass, and from 1.4 to 1.7 parts by mass.

Of the two or more (poly)glycerol fatty acid esters, an amount of the (poly)glycerol fatty acid ester having the highest precipitation temperature used per 100 parts by mass of the water-soluble ethylenically unsaturated monomer used in the first-stage polymerization of the reversed-phase suspension polymerization is preferably 0.1 parts by mass or more, more preferably 0.2 parts by mass or more, and still more preferably 0.3 parts by mass or more; and is preferably 12.0 parts by mass or less, more preferably 6.0 parts by mass or less, still more preferably 4.0 parts by mass or less, even more preferably 1.2 parts by mass or less, still more preferably 1.0 part by mass or less, and even more preferably 0.5 parts by mass or less. Preferred ranges include from 0.1 to 12.0 parts by mass, from 0.1 to 6.0 parts by mass, from 0.1 to 4.0 parts by mass, from 0.1 to 1.2 parts by mass, from 0.1 to 1.0 part by mass, from 0.1 to 0.5 parts by mass, from 0.2 to 12.0 parts by mass, from 0.2 to 6.0 parts by mass, from 0.2 to 4.0 parts by mass, from 0.2 to 1.2 parts by mass, from 0.2 to 1.0 part by mass, from 0.2 to 0.5 parts by mass, from 0.3 to 12.0 parts by mass, from 0.3 to 6.0 parts by mass, from 0.3 to 4.0 parts by mass, from 0.3 to 1.2 parts by mass, from 0.3 to 1.0 part by mass, and from 0.3 to 0.5 parts by mass.

Of the two or more (poly)glycerol fatty acid esters, an amount of the (poly)glycerol fatty acid ester having the lowest precipitation temperature used per 100 parts by mass of the water-soluble ethylenically unsaturated monomer used in the first-stage polymerization of the reversed-phase suspension polymerization is preferably 0.2 parts by mass or more, and more preferably 0.4 parts by mass or more; and is preferably 12.0 parts by mass or less, more preferably 4.0 parts by mass or less, still more preferably 1.2 parts by mass or less, and even more preferably 0.8 parts by mass or less. Preferred ranges include from 0.2 to 12.0 parts by mass, from 0.2 to 4.0 parts by mass, from 0.2 to 1.2 parts by mass, from 0.2 to 0.8 parts by mass, from 0.4 to 12.0 parts by mass, from 0.4 to 4.0 parts by mass, from 0.4 to 1.2 parts by mass, and from 0.4 to 0.8 parts by mass.

When at least one of the (poly)glycerol fatty acid esters is hexaglyceryl tristearate, an amount of the hexaglyceryl tristearate used per 100 parts by mass of the water-soluble ethylenically unsaturated monomer used in the first-stage polymerization of the reversed-phase suspension polymerization is preferably 0.2 parts by mass or more, and more preferably 0.5 parts by mass or more; and is preferably 9.0 parts by mass or less, more preferably 4.0 parts by mass or less, still more preferably 0.9 parts by mass or less, and even more preferably 0.7 parts by mass or less. Preferred ranges include from 0.2 to 9.0 parts by mass, from 0.2 to 4.0 parts by mass, from 0.2 to 0.9 parts by mass, from 0.2 to 0.7 parts by mass, from 0.5 to 9.0 parts by mass, from 0.5 to 4.0 parts by mass, from 0.5 to 0.9 parts by mass, and from 0.5 to 0.7 parts by mass.

When at least one of the (poly)glycerol fatty acid esters is hexaglyceryl tristearate, and when the dispersion stabilizer contains the hexaglyceryl tristearate and at least one of a (poly)glycerol fatty acid ester having a precipitation temperature higher than that of the hexaglyceryl tristearate and a (poly)glycerol fatty acid ester having a precipitation temperature lower than that of the hexaglyceryl tristearate, the (poly)glycerol fatty acid ester having a precipitation temperature higher than that of the hexaglyceryl tristearate may be one (poly)glycerol fatty acid ester, or may be two or more (poly)glycerol fatty acid esters. Likewise, the (poly)glycerol fatty acid ester having a precipitation temperature lower than that of the hexaglyceryl tristearate may be one (poly)glycerol fatty acid ester, or may be two or more (poly)glycerol fatty acid esters.

When at least one of the (poly)glycerol fatty acid esters is hexaglyceryl tristearate, the dispersion stabilizer contains the hexaglyceryl tristearate and at least one of a (poly)glycerol fatty acid ester having a precipitation temperature higher than that of the hexaglyceryl tristearate and a (poly)glycerol fatty acid ester having a precipitation temperature lower than that of the hexaglyceryl tristearate, and the amount of each of the (poly)glycerol fatty acid ester having a precipitation temperature higher than that of the hexaglyceryl tristearate and the (poly)glycerol fatty acid ester having a precipitation temperature lower than that of the hexaglyceryl tristearate used per part by mass of the hexaglyceryl tristearate is preferably 0.0 parts by mass or more, more preferably 0.3 parts by mass or more, and still more preferably 0.5 parts by mass or more; and is preferably 3 parts by mass or less, more preferably 2.0 parts by mass or less, still more preferably 1.3 parts by mass or less, and even more preferably 1.0 part by mass or less. Preferred ranges include from 0.0 to 3.0 parts by mass, from 0.0 to 2.0 parts by mass, from 0.0 to 1.3 parts by mass, from 0.3 to 3.0 parts by mass, from 0.3 to 2.0 parts by mass, from 0.3 to 1.3 parts by mass, from 0.5 to 3.0 parts by mass, from 0.5 to 2.0 parts by mass, and from 0.5 to 1.3 parts by mass.

When at least one of the (poly)glycerol fatty acid esters is hexaglyceryl tristearate, and when the dispersion stabilizer contains the hexaglyceryl tristearate, a (poly)glycerol fatty acid ester having a precipitation temperature higher than that of the hexaglyceryl tristearate, and a (poly)glycerol fatty acid ester having a precipitation temperature lower than that of the hexaglyceryl tristearate, the (poly)glycerol fatty acid ester having a precipitation temperature higher than that of the hexaglyceryl tristearate may be one (poly)glycerol fatty acid ester, or may be two or more (poly)glycerol fatty acid esters. Likewise, the (poly)glycerol fatty acid ester having a precipitation temperature lower than that of the hexaglyceryl tristearate may be one (poly)glycerol fatty acid ester, or may be two or more (poly)glycerol fatty acid esters.

When at least one of the (poly)glycerol fatty acid esters is hexaglyceryl tristearate, the dispersion stabilizer contains the hexaglyceryl tristearate, a (poly)glycerol fatty acid ester having a precipitation temperature higher than that of the hexaglyceryl tristearate, and a (poly)glycerol fatty acid ester having a precipitation temperature lower than that of the hexaglyceryl tristearate, and the amount of each of the (poly)glycerol fatty acid ester having a precipitation temperature higher than that of the hexaglyceryl tristearate and the (poly)glycerol fatty acid ester having a precipitation temperature lower than that of the hexaglyceryl tristearate used per part by mass of the hexaglyceryl tristearate is preferably more than 0.0 parts by mass, more preferably 0.3 parts by mass or more, and still more preferably 0.5 parts by mass or more; and is preferably 2.0 parts by mass or less, more preferably 1.3 parts by mass or less, and still more preferably 1.0 part by mass or less. Preferred ranges include from more than 0.0 parts by mass to 2.0 parts by mass or less, from more than 0.0 parts by mass to 1.3 parts by mass or less, from more than 0.0 parts by mass to 2.0 parts by mass or less, from 0.3 to 2.0 parts by mass, from 0.3 to 1.3 parts by mass, from 0.3 to 1.0 part by mass, from 0.5 to 2.0 parts by mass, from 0.5 to 1.3 parts by mass, and from 0.5 to 1.0 part by mass.

When at least one of the (poly)glycerol fatty acid esters is hexaglyceryl tristearate, and when the dispersion stabilizer contains the hexaglyceryl tristearate, a (poly)glycerol fatty acid ester having a precipitation temperature higher than that of the hexaglyceryl tristearate, and a (poly)glycerol fatty acid ester having a precipitation temperature lower than that of the hexaglyceryl tristearate, the amount of the (poly)glycerol fatty acid ester having a precipitation temperature higher than that of the hexaglyceryl tristearate used per part by mass of the hexaglyceryl tristearate is preferably more than 0.0 parts by mass, more preferably 0.2 parts by mass or more, and still more preferably 0.4 parts by mass or more; and is preferably 2.0 parts by mass or less, more preferably 1.0 part by mass or less, and still more preferably 0.8 parts by mass or less. Preferred ranges include from more than 0.0 parts by mass to 2.0 parts by mass or less, from more than 0.0 parts by mass to 1.0 part by mass or less, from more than 0.0 parts by mass to 0.8 parts by mass or less, from 0.2 to 2.0 parts by mass, from 0.2 to 1.0 part by mass, from 0.2 to 0.8 parts by mass, from 0.4 to 2.0 parts by mass, from 0.4 to 1.0 part by mass, and from 0.4 to 0.8 parts by mass.

When at least one of the (poly)glycerol fatty acid esters is hexaglyceryl tristearate, and when the dispersion stabilizer contains the hexaglyceryl tristearate, a (poly)glycerol fatty acid ester having a precipitation temperature higher than that of the hexaglyceryl tristearate, and a (poly)glycerol fatty acid ester having a precipitation temperature lower than that of the hexaglyceryl tristearate, the amount of the (poly)glycerol fatty acid ester having a precipitation temperature lower than that of the hexaglyceryl tristearate used per part by mass of the hexaglyceryl tristearate is preferably more than 0.0 parts by mass, more preferably 0.2 parts by mass or more, and still more preferably 0.5 parts by mass or more; and is preferably 2.0 parts by mass or less, more preferably 1.5 parts by mass or less, and still more preferably 0.9 parts by mass or less. Preferred ranges include from more than 0.0 parts by mass to 2.0 parts by mass or less, from more than 0 parts by mass to 1.5 parts by mass or less, from more than 0 parts by mass to 0.9 parts by mass or less, from 0.2 to 2.0 parts by mass, from 0.2 to 1.5 parts by mass, from 0.2 to 0.9 parts by mass, from 0.5 to 2.0 parts by mass, from 0.5 to 1.5 parts by mass, and from 0.5 to 0.9 parts by mass.

The number of the two or more (poly)glycerol fatty acid esters having different precipitation temperatures when in the form of a 0.46% by mass heptane solution may be any number that is 2 or more, but is preferably 2 to 5, more preferably 2 to 4, still more preferably 2 or 3, and particularly preferably 3.

In the agglomeration step of the method of the present invention, in addition to the above-mentioned two or more (poly)glycerol fatty acid esters, another dispersion stabilizer different from the (poly)glycerol fatty acid esters may also be present. The other dispersion stabilizer is preferably a polymeric dispersion agent, in view of narrowing the particle size distribution. In the agglomeration step, the total proportion of the two or more (poly)glycerol fatty acid esters in all the dispersion stabilizers is preferably 50% by mass or more, more preferably 60% by mass or more, and still more preferably 80% by mass or more, and may be 90% by mass or more, 95% by mass or more, or 99% by mass or more, for example.

In the step of agglomerating the polymer particles in the presence of a dispersion stabilizer, surfactants and polymeric dispersion agents can be used as the dispersion stabilizer. The (poly)glycerol fatty acid esters are surfactants. Examples of the dispersion stabilizer different from the (poly)glycerol fatty acid esters include the following surfactants and polymeric dispersion agents.

### (Surfactant)

In the reversed-phase suspension polymerization, a dispersion stabilizer may be used to improve the dispersion stability of the water-soluble ethylenically unsaturated monomer in the hydrocarbon dispersion medium. A surfactant may be used as such a dispersion stabilizer.

Examples of usable surfactants include sucrose fatty acid esters, sorbitan fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkyl allyl formaldehyde condensed polyoxyethylene ethers, polyoxyethylene-polyoxypropylene block copolymers, polyoxyethylene polyoxypropyl alkyl ethers, polyethylene glycol fatty acid esters, alkyl glucosides, N-alkyl glyconamides, polyoxyethylene fatty acid amides, polyoxyethylene alkylamines, polyoxyethylene alkyl ether phosphates, and polyoxyethylene alkyl allyl ether phosphates. These surfactants may be used alone or in combinations of two or more.

### (Polymeric Dispersion Agent)

A polymeric dispersion agent may be used in combination with the above-described surfactant, as the dispersion stabilizer to be used in the reversed-phase suspension polymerization.

Examples of the polymeric dispersion agent include maleic anhydride modified polyethylene, maleic anhydride modified polypropylene, maleic anhydride modified ethylene-propylene copolymers, maleic anhydride modified EPDM (ethylene-propylene-diene terpolymers), maleic anhydride modified polybutadiene, maleic anhydride-ethylene copolymers, maleic anhydride-propylene copolymers, maleic anhydride-ethylene-propylene copolymers, maleic anhydride-butadiene copolymers, polyethylene, polypropylene, ethylene-propylene copolymers, oxidized polyethylene, oxidized polypropylene, oxidized ethylene-propylene copolymers, ethylene-acrylic acid copolymers, ethyl cellulose, and ethyl hydroxyethyl cellulose. Among these polymeric dispersion agents, maleic anhydride modified polyethylene, maleic anhydride modified polypropylene, maleic anhydride modified ethylene-propylene copolymers, maleic anhydride-ethylene copolymers, maleic anhydride-propylene copolymers, maleic anhydride-ethylene-propylene copolymers, polyethylene, polypropylene, ethylene-propylene copolymers, oxidized polyethylene, oxidized polypropylene, and oxidized ethylene-propylene copolymers are particularly preferably used, in view of dispersion stability of the monomer. These polymeric dispersion agents may be used alone or in combinations of two or more.

### [Other Components]

In the method for producing water-absorbent resin particles, other components may be optionally added to the aqueous solution containing the water-soluble ethylenically unsaturated monomer, which is then subjected to the reversed-phase suspension polymerization. Various additives such as thickeners and chain transfer agents can be added as the other components.

For example, a thickener may be added to the aqueous solution containing the water-soluble ethylenically unsaturated monomer, which is then subjected to the reversed-phase suspension polymerization. By thus adding a thickener to adjust the viscosity of the aqueous solution, the median particle size obtained by the reversed-phase suspension polymerization can be controlled.

Examples of usable thickeners include hydroxyethylcellulose, hydroxypropylcellulose, methylcellulose, carboxymethylcellulose, polyacrylic acid, (partially) neutralized polyacrylic acid, polyethylene glycol, polyacrylamide, polyethyleneimine, dextrin, sodium alginate, polyvinyl alcohol, polyvinylpyrrolidone, and polyethylene oxide. When the stirring rate during the polymerization is the same, the higher the viscosity of the water-soluble ethylenically unsaturated monomer solution, the larger the primary particles and/or secondary particles of the resulting particles tend to be.

### [Reversed-Phase Suspension Polymerization]

The reversed-phase suspension polymerization includes, for example, dispersing an aqueous monomer solution containing the water-soluble ethylenically unsaturated monomer in a hydrocarbon dispersion medium, in the presence of two or more (poly)glycerol fatty acid esters (and optionally another dispersion stabilizer) as the dispersion stabilizer. Here, as long as the dispersion stabilizer is added before the beginning of the polymerization reaction, it may be added either before or after the addition of the aqueous monomer solution.

In particular, in view of readily reducing the amount of the hydrocarbon dispersion medium remaining in the resulting water-absorbent resin particles, it is preferred to disperse the aqueous monomer solution in the hydrocarbon dispersion medium in which a polymeric dispersion agent is dispersed, and then disperse a surfactant in the resulting dispersion, followed by polymerization.

The reversed-phase suspension polymerization described above can be performed in two or more multiple stages. In view of improving productivity, the reversed-phase suspension polymerization is preferably performed in two or three stages.

The reversed-phase suspension polymerization in two or more multiple stages may be performed as follows: the first stage of the reversed-phase suspension polymerization is performed; subsequently, the water-soluble ethylenically unsaturated monomer is added to and mixed with the reaction mixture obtained by the first-stage polymerization reaction, and the second and subsequent stages of the reversed-phase suspension polymerization are performed in the same manner as in the first stage. In each of the second and subsequent stages of the reversed-phase suspension polymerization, it is preferred to add, in addition to the water-soluble ethylenically unsaturated monomer, a radical polymerization initiator within the above-described range of molar ratios of each component relative to the water-soluble ethylenically unsaturated monomer, based on the amount of the water-soluble ethylenically unsaturated monomer added in each of the second and subsequent stages of the reversed-phase suspension polymerization, and then perform the reversed-phase suspension polymerization. In the second and subsequent stages of polymerization, an internal-crosslinking agent may also be optionally added to the water-soluble ethylenically unsaturated monomer.

The reaction temperature during the polymerization reaction is preferably 20 to 110°C, and more preferably 40 to 90°C, in view of allowing the polymerization to proceed quickly to reduce the polymerization time for improved economic efficiency, and readily removing the heat of polymerization to perform the reaction smoothly.

As long as the step of agglomerating the polymer particles is performed after the first stage of the reversed-phase suspension polymerization, the agglomeration step may be performed between the first and second stages of the reversed-phase suspension polymerization, or may be performed after the second stage or a subsequent stage of the reversed-phase suspension polymerization. In view of more suitably achieving the effect of the present invention, the step of agglomerating the polymer particles is preferably performed between the first and second stages of the reversed-phase suspension polymerization. In the step of agglomerating the polymer particles, the polymerization reaction of the water-soluble ethylenically unsaturated monomer may or may not be proceeding.

In the present invention, when agglomerating the polymer particles obtained in the first stage of the reversed-phase suspension polymerization in the agglomeration step, the temperature of the slurry is adjusted to allow the two or more (poly)glycerol fatty acid esters having different precipitation temperatures to precipitate stepwise, so that the degree of agglomeration of the polymer particles can be controlled. For example, before the water-soluble ethylenically unsaturated monomer solution is added in the second stage of the reversed-phase suspension polymerization, the temperature of the slurry is lowered to precipitate at least one of the two or more (poly)glycerol fatty acid esters. In this case, droplets of the water-soluble ethylenically unsaturated monomer subsequently added are not stabilized in the hydrocarbon dispersion medium and are absorbed by the polymer particles (primary particles in the form of a gel), so that the agglomeration of the polymer particles is promoted. On the other hand, when the temperature of the slurry is raised, the (poly)glycerol fatty acid ester is dissolved, and the droplets of the water-soluble ethylenically unsaturated monomer are stabilized in the hydrocarbon dispersion medium, so that the agglomeration of the polymer particles is inhibited. In the present invention, the promotion and inhibition of the agglomeration of the polymer particles is adjusted to allow water-absorbent resin particles having a narrow particle size distribution to be suitably produced.

The range of temperatures in the agglomeration step is not specifically limited as long as the agglomeration of the polymer particles can be adjusted in that range of temperatures, and the range is, for example, 5 to 50°C, preferably 10 to 40°C, and more preferably 15 to 30°C.

### <Dehydration Step>

After the reversed-phase suspension polymerization is performed as described above, the method may include a dehydration treatment in which the water, the hydrocarbon dispersion medium, and the like are removed by distillation, by adding external energy, such as heat. To remove the water in the hydrous gel after the reversed-phase suspension polymerization, the system in which the hydrous gel is dispersed in the hydrocarbon dispersion medium is heated to distill the water and the hydrocarbon dispersion medium out of the system by azeotropic distillation. Here, if the distilled hydrocarbon dispersion medium only is returned into the system, continuous azeotropic distillation can be performed. This is preferable in view of preventing deterioration of the resin, because the temperature within the system during drying is maintained at a temperature not higher than the azeotropic temperature with the hydrocarbon dispersion medium. By controlling the conditions for the dehydration treatment after the polymerization to adjust the amount of water to be removed (that is, adjust the water content in the polymer particles), various kinds of performance of the resulting water-absorbent resin particles can be controlled.

In the dehydration step, the dehydration treatment by distillation may be performed under atmospheric pressure. When the dehydration treatment is performed under atmospheric pressure, the dehydration temperature is preferably 70 to 250°C, more preferably 80 to 180°C, still more preferably 80 to 140°C, and even more preferably 90 to 130°C.

### <Surface-Crosslinking Step>

The surface-crosslinking step is the step of subjecting the polymer particles obtained in the polymerization step to surface-crosslinking. When the polymer particles are crosslinked polymer particles (a hydrous gel), the surface-crosslinking step is the step of crosslinking the hydrous gel having an internal-crosslinked structure obtained by polymerization of the water-soluble ethylenically unsaturated monomer, by adding a surface-crosslinking agent thereto (surface-crosslinking reaction). The surface-crosslinking reaction is preferably performed in the presence of a surface-crosslinking agent, after the polymerization of the water-soluble ethylenically unsaturated monomer. By thus subjecting the hydrous gel having an internal-crosslinked structure to the surface-crosslinking reaction after the polymerization, it is possible to obtain water-absorbent resin particles having an increased crosslinking density near the surfaces of the water-absorbent resin particles to exhibit improvement in various kinds of performance, such as water absorption capacity under load.

Examples of the surface-crosslinking agent include compounds with two or more reactive functional groups. Examples include polyols, such as ethylene glycol, propylene glycol, 1,4-butanediol, diethylene glycol, triethylene glycol, trimethylolpropane, glycerin, polyoxyethylene glycol, polyoxypropylene glycol, and polyglycerin; polyglycidyl compounds, such as (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether; haloepoxy compounds, such as epichlorohydrin, epibromohydrin, and α-methyl epichlorohydrin; isocyanate compounds, such as 2,4-tolylene diisocyanate and hexamethylene diisocyanate; oxetane compounds, such as 3-methyl-3-oxetanemethanol, 3-ethyl-3-oxetanemethanol, 3-butyl-3-oxetanemethanol, 3-methyl-3-oxetaneethanol, 3-ethyl-3-oxetaneethanol, and 3-butyl-3-oxetaneethanol; oxazoline compounds, such as 1,2-ethylenebisoxazoline; carbonate compounds (e.g., alkylene carbonates), such as ethylene carbonate, propylene carbonate, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxan-2-one, 4-methyl-1,3-dioxan-2-one, 4,6-dimethyl-1,3-dioxan-2-one, and 1,3-dioxolan-2-one; and hydroxyalkylamide compounds, such as bis[N,N-di(B-hydroxyethyl)]adipamide. Preferred among these surface-crosslinking agents are polyglycidyl compounds, such as (poly)ethylene glycol diglycidyl ether, (poly)glycerin diglycidyl ether, (poly)glycerin triglycidyl ether, trimethylolpropane triglycidyl ether, (poly)propylene glycol polyglycidyl ether, and (poly)glycerol polyglycidyl ether. These surface-crosslinking agents may be used alone or in combinations of two or more.

The amount of the surface-crosslinking agent used is preferably 0.00001 to 0.01 mol, more preferably 0.00005 to 0.005 mol, and still more preferably 0.0001 to 0.002 mol, per mole of the total amount of the water-soluble ethylenically unsaturated monomer used for polymerization.

The surface-crosslinking agent may be added as is or as an aqueous solution. Optionally, a solution of the surface-crosslinking agent in a hydrophilic organic solvent may be added. Examples of the hydrophilic organic solvent include lower alcohols, such as methyl alcohol, ethyl alcohol, n-propyl alcohol, and isopropyl alcohol; ketones, such as acetone and methyl ethyl ketone; ethers, such as diethyl ether, dioxane, and tetrahydrofuran; amides, such as N,N-dimethylformamide; and sulfoxides, such as dimethylsulfoxide. These hydrophilic organic solvents may be used alone, in combinations of two or more, or as a solvent mixture with water.

The surface-crosslinking agent may be added at any time after the polymerization reaction of the water-soluble ethylenically unsaturated monomer is substantially completed. The surface-crosslinking agent is preferably added in the presence of 1 to 400 parts by mass of water, more preferably 5 to 200 parts by mass of water, still more preferably 10 to 100 parts by mass of water, even more preferably 20 to 60 parts by mass of water, per 100 parts by mass of the water-soluble ethylenically unsaturated monomer. The amount of water herein refers to the total amount of the water contained in the reaction system and the water optionally used during the addition of the surface-crosslinking agent.

In view of more suitably achieving the effect of the present invention, the water content in the polymer particles when the surface-crosslinking agent is added thereto is preferably 1% by mass or more, more preferably 10% by mass or more, and still more preferably 20% by mass or more; and is preferably 60% by mass or less, more preferably 40% by mass or less, and still more preferably 35% by mass or less. Preferred ranges include from 1 to 60% by mass, from 1 to 40% by mass, from 1 to 35% by mass, from 10 to 60% by mass, from 10 to 40% by mass, from 10 to 35% by mass, from 20 to 60% by mass, from 20 to 40% by mass, and from 20 to 35% by mass.

The reaction temperature during the surface-crosslinking reaction is preferably 50 to 250°C, more preferably 60 to 180°C, still more preferably 60 to 140°C, and even more preferably 70 to 120°C. The reaction time of the surface-crosslinking reaction is preferably 1 to 300 minutes, and more preferably 5 to 200 minutes.

### <Drying Step>

After the surface-crosslinking is performed as described above, the method may include a drying treatment in which the water, the hydrocarbon dispersion medium, and the like are removed by distillation, by adding external energy, such as heat. The polymer particles after the surface-crosslinking are dried to distill off the water and hydrocarbon dispersion medium to obtain water-absorbent resin particles.

In the drying step, the drying treatment by distillation may be performed under atmospheric pressure or reduced pressure. The drying treatment may also be performed in a stream of nitrogen or the like, in view of improving the drying efficiency. When the drying treatment is performed under atmospheric pressure, the drying temperature is preferably 70 to 250°C, more preferably 80 to 180°C, still more preferably 80 to 140°C, and even more preferably 90 to 130°C. When the drying treatment is performed under reduced pressure, the drying temperature is preferably 40 to 160°C, and more preferably 50 to 110°C.

When the surface-crosslinking step with a surface-crosslinking agent is performed after the polymerization of the monomer by the reversed-phase suspension polymerization, the drying step by distillation is performed as described above, after the completion of the surface-crosslinking step. Alternatively, the surface-crosslinking step and the drying step may be performed simultaneously.

The water-absorbent resin particles of the present invention may contain additives suitable for its purpose. Examples of such additives include inorganic powders, surfactants, oxidizing agents, reducing agents, metal chelating agents, radical chain inhibitors, antioxidants, and anti-bacterial agents. For example, the flowability of the water-absorbent resin particles can be further improved by adding 0.05 to 5 parts by mass of amorphous silica as an inorganic powder to 100 parts by mass of the water-absorbent resin particles. The additives are preferably hydrophilic or water-soluble.

### 2. Water-Absorbent Resin Particles

By using the method for producing water-absorbent resin particles of the present invention described above, water-absorbent resin particles having a narrow particle size distribution can be suitably produced. More specifically, by using the method for producing water-absorbent resin particles of the present invention, it is possible to suitably produce, for example, water-absorbent resin particles having a particle size distribution uniformity of 2.5 or less and containing (poly)glycerol fatty acid esters near surfaces of the water-absorbent resin particles.

The particle size distribution uniformity of the water-absorbent resin particles of the present invention may be any value that is 2.5 or less, but is preferably 2.3 or less, more preferably 1.8 or less, and still more preferably 1.6 or less. The lower limit is, for example, 1.

The particle size distribution uniformity of the water-absorbent resin particles is measured using the method described in the Examples section.

Furthermore, the water-absorbent resin particles of the present invention contain (poly)glycerol fatty acid esters near the surfaces. In the method for producing water-absorbent resin particles of the present invention, the (poly)glycerol fatty acid esters are used as described above. Therefore, the (poly)glycerol fatty acid esters are included near the surfaces of the water-absorbent resin particles. Specific examples of the (poly)glycerol fatty acid esters are the same as those mentioned in connection with the method for producing water-absorbent resin particles of the present invention. Two or more (poly)glycerol fatty acid esters are preferably included, and hexaglyceryl tristearate is preferably included, near the surfaces of the water-absorbent resin particles.

The amount of the (poly)glycerol fatty acid esters included near the surfaces of the water-absorbent resin particles of the present invention is preferably 1 part by mass or less, more preferably 0.65 parts by mass or less, and still more preferably 0.55 parts by mass or less, per 100 parts by mass of the water-absorbent resin particles. The lower limit is preferably 0.1 parts by mass or more, more preferably 0.2 parts by mass or more, and still more preferably 0.3 parts by mass or more.

Furthermore, the water-absorbent resin particles of the present invention have a yellowness index of preferably 20 or less, more preferably 15 or less, and still more preferably 12 or less, after being heated at 200°C for 2 hours. The lower limit of the yellowness index is, for example, zero.

The water-absorbent resin particles of the present invention have an initial value of yellowness index (yellowness index before being heated at 200°C for 2 hours) of preferably 15 or less, more preferably 12 or less, and still more preferably 10 or less. The lower limit of the yellowness index is, for example, zero.

Each of the yellowness indices of the water-absorbent resin particles before and after heating at 200°C for 2 hours is measured using the method described in the Examples section.

The water-absorbent resin particles of the present invention are preferably formed of a crosslinked product of a polymer of a water-soluble ethylenically unsaturated monomer, that is, a crosslinked polymer having a structural unit derived from a water-soluble ethylenically unsaturated monomer.

The water-absorbent resin particles of the present invention are in a form in which fine particles (primary particles) are agglomerated (secondary particles). Examples of the shape of the primary particles include a substantially spherical shape, an indefinite crushed shape, and a plate shape. The water-absorbent resin particles of the present invention that are the secondary particles may have various shapes. Examples of the shape of the water-absorbent resin particles include a granular shape, a substantially spherical shape, an indefinite crushed shape, a plate shape, a fibrous shape, a flake shape, or a shape formed by agglomeration of such a resin. The water-absorbent resin particles preferably have, for example, a granular shape, a substantially spherical shape, an indefinite crushed shape, a fibrous shape, or a shape formed by agglomeration of such a resin.

The water-absorbent resin particles preferably have a median particle size of 100 ¡..tm or more, 150 µm or more, 200 ¡..tm or more, 250 µm or more, 280 µm or more, 300 µm or more, or 320 µm or more. From the same viewpoint, the median particle size is preferably 700 µm or less, 600 µm or less, 550 µm or less, 500 ¡..tm or less, 450 µm or less, or 400 ¡..tm or less. That is, the median particle size is preferably 150 to 700 µm, preferably 200 to 600 µm, more preferably 250 to 500 µm, still more preferably 250 to 450 µm, and even more preferably 250 to 400 µm.

The median particle size of the water-absorbent resin particles can be measured using JIS standard sieves; specifically, it is the value as measured by the method described in the Examples section.

The water-absorbent resin particles have a physiological saline absorption rate of preferably 20 seconds or more, more preferably 25 seconds or more, and still more preferably 30 seconds or more. On the other hand, the physiological saline absorption rate is preferably 65 seconds or less, more preferably 60 seconds or less, and still more preferably 55 seconds or less. Preferred ranges include from 20 to 65 seconds and from 25 to 60 seconds.

The water-absorbent resin particles of the present invention have a physiological saline retention amount of preferably 20 g/g or more, and more preferably 30 g/g or more. On the other hand, the physiological saline retention amount is preferably 80 g/g or less, more preferably 60 g/g or less, still more preferably 55 g/g or less, and even more preferably 53 g/g or less. Preferred ranges include from 20 to 80 g/g, from 20 to 60 g/g, from 20 to 55 *g*/*g,* from 20 to 53 g/g, from 30 to 80 g/g, from 30 to 60 g/g, from 30 to 55 g/g, and from 30 to 53 g/g.

### 3. Absorbent Material and Absorbent Article

The water-absorbent resin particles of the present invention constitute an absorbent material used for hygienic materials, such as sanitary articles and disposable diapers, for example, and are suitably used for an absorbent article including the absorbent material.

The absorbent material of the present invention contains the water-absorbent resin particles of the present invention. The absorbent material may further contain hydrophilic fibers. Examples of the structure of the absorbent material include a sheet-like structure in which the water-absorbent resin particles are fixed on a nonwoven fabric or between a plurality of nonwoven fabrics; a mixed dispersion obtained by mixing the water-absorbent resin particles and hydrophilic fibers to give a homogeneous composition; a sandwich structure in which the water-absorbent resin particles are sandwiched between layered hydrophilic fibers; and a structure in which the water-absorbent resin particles and hydrophilic fibers are wrapped in a tissue. The absorbent material may also contain other components, for example, adhesive binders such as thermal bonding synthetic fibers, hot melt adhesives, and adhesive emulsions, for improving the shape retention properties of the absorbent material.

The water-absorbent resin particles in the absorbent material of the present invention have a basis weight of 50 g/m² or more and 400 g/m² or less. The basis weight is preferably 100 g/m² or more, more preferably 120 g/m² or more, and still more preferably 140 g/m² or more, while the basis weight is preferably 300 g/m² or less, more preferably 250 g/m² or less, and still more preferably 200 g/m² or less.

The hydrophilic fibers may be, for example, at least one selected from the group consisting of finely ground wood pulp, cotton, cotton linter, rayon, cellulose acetate, polyamides, polyesters, and polyolefins. Examples include cellulose fibers, such as cotton-like pulp made from wood, mechanical pulp, chemical pulp, and semi-chemical pulp; artificial cellulose fibers, such as rayon and acetate; and fibers made of synthetic resins, such as hydrophilized polyamides, polyesters, and polyolefins. The hydrophilic fibers typically have an average fiber length of 0.1 to 10 mm. Alternatively, the average fiber length may be 0.5 to 5 mm.

The hydrophilic fibers in the absorbent material of present invention have a basis weight of 50 g/m² or more and 800 g/m² or less. The basis weight is preferably 100 g/m² or more, more preferably 120 g/m² or more, and still more preferably 140 g/m² or more, while the basis weight is preferably 700 g/m² or less, more preferably 600 g/m² or less, and still more preferably 500 g/m² or less.

The content of the water-absorbent resin particles in the absorbent material is preferably 5 to 100% by mass, more preferably 10 to 95% by mass, still more preferably 20 to 90% by mass, and even more preferably 30 to 80% by mass.

It is possible to obtain the absorbent article of the present invention by holding the absorbent material obtained using the water-absorbent resin particles of the present invention between a liquid-permeable sheet (top sheet) that allows a liquid to pass through and a liquid-impermeable sheet (back sheet) that does not allow a liquid to pass through. The liquid-permeable sheet is positioned on the side that is brought into contact with the body, and the liquid-impermeable sheet is positioned opposite to the side that is brought into contact with the body.

Examples of the liquid-permeable sheet include porous synthetic resin sheets and nonwoven fabrics of the types such as air-through type, spunbond type, chemical bond type, and needle punch type, which are made of fibers of polyethylene, polypropylene, polyester, and the like. Examples of the liquid-impermeable sheet include synthetic resin films made of resins such as polyethylene, polypropylene, and polyvinyl chloride. The liquid-permeable sheet is preferably at least one selected from the group consisting of a thermally bonded nonwoven fabric, an air-through nonwoven fabric, a spunbond nonwoven fabric, and a spunbond/melt-blown/spunbond nonwoven fabric.

The liquid-permeable sheet has a basis weight of preferably 5 g/m² or more and 100 g/m² or less, more preferably 10 g/m² or more and 60 g/m² or less. The surface of the liquid-permeable sheet may be embossed or perforated in order to improve the liquid diffusibility. The embossing and perforating can be performed by known methods.

Examples of the liquid-impermeable sheet include a sheet made of a synthetic resin such as polyethylene, polypropylene, or polyvinyl chloride, a sheet made of a nonwoven fabric such as a spunbond/melt-blown/spunbond (SMS) nonwoven fabric in which a water-resistant melt-blown nonwoven fabric is sandwiched between high-strength spunbond nonwoven fabrics, and a sheet made of a composite material of these synthetic resins and a nonwoven fabric (for example, a spunbond nonwoven fabric or a spunlace nonwoven fabric). As the liquid-impermeable sheet, a sheet made of a synthetic resin mainly containing a low-density polyethylene (LDPE) resin can also be used. The liquid-impermeable sheet may be, for example, a sheet made of a synthetic resin having a basis weight of 10 to 50 g/m².

The absorbent article preferably includes a laminate having an absorbent material containing the water-absorbent resin particles and core wraps sandwiching upper and lower portions of the absorbent material; a liquid-permeable sheet disposed on an upper surface of the laminate; and a liquid-impermeable sheet disposed on a surface of the laminate opposite to the liquid-permeable sheet side.

Examples

The present invention will be hereinafter described in detail with reference to examples and a comparative example. However, the present invention is not limited to the examples.

The water-absorbent resin particles obtained in the examples and comparative example below were evaluated using the tests described below. Unless otherwise indicated, the measurement was performed in an environment at a temperature of 25 ± 2°C and a humidity of 50 ± 10%.

### <Production of Water-Absorbent Resin Particles>

### (Example 1)

An 11 cm inner diameter, 2 L volume, cylindrical round-bottomed separable flask, which was equipped with a reflux condenser, a dropping funnel, a nitrogen gas inlet tube, and an agitator (stirring blades having two stages of four inclined paddle blades with a blade diameter of 5 cm), was prepared. In the separable flask, 300 g of n-heptane (hydrocarbon dispersion medium) was placed, and 0.737 g of tetraglyceryl tristearate (dispersion stabilizer, SY-Glyster TS-3S, manufactured by Sakamoto Yakuhin Kogyo Co., Ltd.) and 0.737 g of hexaglyceryl tristearate (dispersion stabilizer, SY-Glyster TS-5S, manufactured by Sakamoto Yakuhin Kogyo Co., Ltd.) were added. The mixture was heated with stirring to 80°C to dissolve the dispersion stabilizers and then cooled to 55°C.

Next, in a 500 mL volume erlenmeyer flask, 92.0 g (acrylic acid: 1.03 mol) of an 80.5% by mass aqueous solution of acrylic acid was placed. Subsequently, 102.78g of a 30% by mass aqueous solution of sodium hydroxide was added dropwise, with external cooling, to achieve 75 mol% neutralization. Then, 0.0736 g (0.272 mmol) of potassium persulfate (water-soluble radical polymerization initiator), 0.0101 g (0.0580 mmol) of ethylene glycol diglycidyl ether (internal-crosslinking agent), and 44.62 g of ion exchange water were added and then dissolved to prepare a first-stage aqueous solution.

The first-stage aqueous solution described above was added to the separable flask described above, and the separable flask system was thoroughly purged with nitrogen while stirring at a rotation speed of 400 rpm. Then, the separable flask was immersed in a water bath at 70°C to heat the reaction mixture, and first-stage polymerization was performed for 60 minutes to give a first-stage slurry.

Next, in another 500 mL volume erlenmeyer flask, 128.8 g (acrylic acid: 1.44 mol) of an 80.5% by mass aqueous solution of acrylic acid was placed. Subsequently, 143.89 g of a 30% by mass aqueous solution of sodium hydroxide was added dropwise, with external cooling, to achieve 75 mol% neutralization. Then, 0.1030 g (0.3810 mmol) of potassium persulfate, 0.0116 g (0.0666 mmol) of ethylene glycol diglycidyl ether (internal-crosslinking agent), and 16.75 g of ion exchange water were added and then dissolved to prepare a second-stage aqueous solution.

The separable flask system was cooled to 20°C while stirring the first-stage slurry at a rotation speed of 1000 rpm. Then, the entire amount of the second-stage aqueous solution was added to the first-stage slurry, and the agglomeration step was performed. The system was purged with nitrogen for 30 minutes; then, the separable flask was again immersed in a water bath at 70°C and heated, and the polymerization reaction was performed for 60 minutes to give a second-stage slurry.

After the second-stage polymerization, the second-stage slurry was heated in an oil bath at 125°C to remove 248 g of water out of the system by azeotropic distillation of the water and n-heptane, while refluxing the n-heptane. Then, the mixture was dried by evaporating the n-heptane to give a dried product. The dried product was passed through a sieve with a mesh size of 850 µm to give 203.8 g of water-absorbent resin particles in a form in which substantially spherical particles had been agglomerated.

### (Example 2)

The same procedure as in Example 1 was followed, except that the tetraglyceryl tristearate used in Example 1 was replaced by decaglyceryl pentastearate (dispersion stabilizer, NIKKOL Decaglyn 5-SV, manufactured by Nippon Surfactant Industries Co., Ltd.), to give 200.3 g of water-absorbent resin particles.

### (Example 3)

The same procedure as in Example 1 was followed, except that 0.737 g of the tetraglyceryl tristearate and 0.737 g of the hexaglyceryl tristearate used in Example 1 were replaced by 0.552 g of tetraglyceryl tristearate, 0.552 g of hexaglyceryl tristearate, and 0.184 g of decaglyceryl pentastearate, to give 194.5 g of water-absorbent resin particles.

### (Example 4)

The same procedure as in Example 1 was followed, except that 0.737 g of the tetraglyceryl tristearate and 0.737 g of the hexaglyceryl tristearate used in Example 1 were replaced by 0.276 g of tetraglyceryl tristearate, 0.460 g of hexaglyceryl tristearate, and 0.368 g of decaglyceryl pentastearate, to give 215.5 g of water-absorbent resin particles.

### (Example 5)

An 11 cm inner diameter, 2 L volume, cylindrical round-bottomed separable flask, which was equipped with a reflux condenser, a dropping funnel, a nitrogen gas inlet tube, and an agitator (stirring blades having two stages of four inclined paddle blades with a blade diameter of 5 cm), was prepared. In the separable flask, 293 g of n-heptane (hydrocarbon dispersion medium) was placed, and 0.276 g of a maleic anhydride-modified ethylene-propylene copolymer (polymeric dispersion agent, Hi-Wax 1105A, Mitsui Chemicals, Inc.) was added. The mixture was heated with stirring to 80°C to dissolve the dispersion agent and then cooled to 55°C.

Next, in a 500 mL volume erlenmeyer flask, 92.0 g (acrylic acid: 1.03 mol) of an 80.5% by mass aqueous solution of acrylic acid was placed. Subsequently, 102.78 of a 30% by mass aqueous solution of sodium hydroxide was added dropwise, with external cooling, to achieve 75 mol% neutralization. Then, 0.0736 g (0.272 mmol) of potassium persulfate (water-soluble radical polymerization initiator), 0.0558 g of tetra(ethylene glycol)diacrylate (internal-crosslinking agent), and 44.62 g of ion exchange water were added and then dissolved to prepare a first-stage aqueous solution.

The first-stage aqueous solution described above was added to the separable flask described above and stirred for 10 minutes. Then, 0.276 g of tetraglyceryl tristearate, 0.460 g of hexaglyceryl tristearate, and 0.368 g of decaglyceryl pentastearate were heated and dissolved in 6.62 g of n-heptane to give a dispersion stabilizer solution. 7.724 g of the resulting dispersion stabilizer solution was added to the separable flask, and the separable flask system was thoroughly purged with nitrogen while stirring at a rotation speed of 400 rpm. Then, the separable flask was immersed in a water bath at 70°C to heat the reaction mixture, and first-stage polymerization was performed for 60 minutes to give a first-stage slurry.

Next, in another 500 mL volume erlenmeyer flask, 128.8 g (acrylic acid: 1.44 mol) of an 80.5% by mass aqueous solution of acrylic acid was placed. Subsequently, 143.89 g of a 30% by mass aqueous solution of sodium hydroxide was added dropwise, with external cooling, to achieve 75 mol% neutralization. Then, 0.1030 g (0.3810 mmol) of potassium persulfate, 0.0447 g of tetra(ethylene glycol)diacrylate (internal-crosslinking agent), and 16.75 g of ion exchange water were added and then dissolved to prepare a second-stage aqueous solution.

The separable flask system was cooled to 20°C while stirring the first-stage slurry at a rotation speed of 1000 rpm. Then, the entire amount of the second-stage aqueous solution was added to the first-stage slurry, and the agglomeration step was performed. The system was purged with nitrogen for 30 minutes; then, the flask was again immersed in a water bath at 70°C and heated, and the polymerization reaction was performed for 60 minutes to give a second-stage slurry.

After the second-stage polymerization, the second-stage slurry was heated in an oil bath at 125°C to remove 248 g of water out of the system by azeotropic distillation of the water and n-heptane, while refluxing the n-heptane. Then, the mixture was dried by evaporating the n-heptane to give a dried product. The dried product was passed through a sieve with a mesh size of 850 ¡..tm to give 205.4 g of water-absorbent resin particles in a form in which substantially spherical particles had been agglomerated.

### (Comparative Example 1)

The same procedure as in Example 1 was followed, except that 0.737 g of the tetraglyceryl tristearate and 0.737 g of the hexaglyceryl tristearate used in Example 1 were replaced by 1.289 g of tetraglyceryl tristearate, to give 103.1 g of water-absorbent resin particles.

### <Evaluation of Water-Absorbent Resin Particles>

### (Median Particle Size)

A water-absorbent resin composition was prepared by mixing 0.5 g of amorphous silica (Tokusil NP-S, manufactured by Oriental Silicas Corporation) as a lubricant with 100 g of the water-absorbent resin particles. In this measurement, 7 types of JIS standard sieves (mesh size: 600 µm, 500 µm, 425 µm, 300 µm, 250 µm, 150 µm, and 75 µm) were used. The water-absorbent resin composition was placed on the top of the sieves obtained by combining the selected JIS standard sieves described above and a receiving tray in order, and shaken for 20 minutes using a Ro-Tap shaker. Next, the mass of the water-absorbent resin composition remaining on each sieve was calculated as the mass percentage relative to the total mass, and integrated in ascending order of particle size. In this manner, the relationship between the sieve mesh size and the cumulative value of the mass percentage of the water-absorbent resin composition remaining on each sieve was plotted on logarithmic probability paper. The plots on the probability paper were connected with straight lines, and a particle size corresponding to a 50% by mass cumulative mass percentage was determined as the median particle size. The results are shown in Table 3.

### (Uniformity)

In the measurement of the median particle size described above, a particle size (A1) corresponding to a 10% by mass cumulative undersize mass percentage and a particle size (A2) corresponding to a 60% by mass cumulative undersize mass percentage were determined, and the uniformity was determined using the equation shown below. The results are shown in Table 3. $Uniformity = A 2 / A 1$

That is, the uniformity approaches 1 as the particle size distribution becomes narrower, while the uniformity becomes more than 1 as the particle size distribution becomes wider.

### (Precipitation Temperatures of Dispersion Stabilizers)

The precipitation temperature of each dispersion stabilizer was determined by cooling a mixed solution in which the dispersion stabilizer was dissolved by heating in a solvent, and measuring the turbidity of the mixed solution at each temperature. Specifically, 100 g of n-heptane (hydrocarbon dispersion medium) and 0.46 g of the dispersion stabilizer were added to an eggplant-shaped flask. This solution was heated to 80°C while stirring with a stirrer chip to give the mixed solution in which the dispersion stabilizer was dissolved. Thereafter, the mixed solution was cooled, and turbidities were measured every 1°C using the integrating-sphere turbid meter SEP-PT-706D (manufactured by Nittoseiko Analytech Co., Ltd., optical path length: 10 mm), based on a calibration curve prepared with a turbidity standard solution (kaolin, 1000 degrees). The precipitation temperature of the dispersion stabilizer was determined by comparing turbidity at each temperature and turbidity at a temperature 1°C higher than that temperature, and defining the temperature at which the turbidity increased by 10 ppm or more as the precipitation temperature. The results are shown in Table 1.

### <Yellow Coloration Test Before and After Heating at 200°C for 2 Hours (Measurement of Yellowness Indices)>

2.0 g of the water-absorbent resin particles were uniformly placed in a glass measurement container with an inner diameter of 3 cm. The yellowness index of the water-absorbent resin particles was measured with a colorimeter (Color Meter ZE6000, manufactured by Nippon Denshoku Industries Co., Ltd.) having the tristimulus values X, Y, and Z of a colorimetric color difference meter calibrated with a standard white plate. From the obtained X, Y, and Z (tristimulus values) of the water-absorbent resin particles, the yellowness index was calculated based on the following equation and used as a yellowness index before heating. The results are shown in Table 3. $Yellowness index = 100 \left(1.28X-1.06Z\right) / Y$

A yellowness index after heating of the water-absorbent resin particles was tested as follows. 2.0 g of the water-absorbent resin particles were uniformly placed in a glass petri dish with an inner diameter of 3 cm and a depth of 1 cm. A vacuum dryer (AVO-310N, manufactured by AS ONE Corporation), through which nitrogen had been passed such that the flow rate at the outlet was 400 mL/min and which had been preheated to 200 ± 5°C, was prepared, and a heat insulating material of glass wool with a thickness of 3 cm was laid on the inner bottom. A stainless steel tray was placed on the heat insulating material in the vacuum dryer, and the glass petri dish containing the water-absorbent resin particles and a surface thermometer were placed on the stainless steel tray. From the point in time when the surface thermometer displayed 200 ± 5°C, heating was performed for 2 hours. Thereafter, the glass petri dish containing the water-absorbent resin particles was removed together with the stainless steel tray from the vacuum dryer, and allowed to stand in a desiccator for 30 minutes to be cooled to room temperature. The entire amount of the water-absorbent resin particles in the glass petri dish was placed in a glass measurement container with an inner diameter of 3 cm, and the yellowness index of the water-absorbent resin particles was measured with a colorimeter (Color Meter ZE6000, manufactured by Nippon Denshoku Industries Co., Ltd.). From the obtained X, Y, and Z (tristimulus values) of the water-absorbent resin particles, the yellowness index was calculated based on the equation above and used as a yellowness index after heating. The results are shown in Table 3.

**[Table 1]**

| Dispersion stabilizer | Material name | Precipitation temperature (°C) | HLB |
|---|---|---|---|
| SY-Glyster TS-3S | Tetraglyceryl tristearate | 29 | 4.1 |
| SY-Glyster TS-5S | Hexaglyceryl tristearate | 28 | 5.4 |
| NIKKOL Decaglyn 5-SV | Decaglyceryl pentastearate | 25 | 4.9 |

**[Table 2]**

| | Dispersion stabilizer(s) used in the agglomeration step | | | | | | | | | |
|---|---|---|---|---|---|---|---|---|---|---|
| | Type of dispersion stabilizer | | | Amount of the dispersion stabilizer added (part(s) by mass | | | Precipitation temperature of the dispersion stabilizer (°C) | | | Difference between the precipitation temperatures (°C) |
| | 1 | 2 | 3 | 1 | 2 | 3 | 1 | 2 | 3 | |
| Ex. 1 | SY-Glyster TS-3S | SY-Glyster TS-5S | - | 1.00 | 1.00 | - | 29 | 28 | - | 1 |
| Ex. 2 | - | SY-Glyster TS-5S | NIKKOL Decaglyn 5-SV | - | 1.00 | 1.00 | - | 28 | 25 | 3 |
| Ex. 3 | SY-Glyster TS-3S | SY-Glyster TS-5S | NIKKOL Decaglyn 5-SV | 0.75 | 0.75 | 0.25 | 29 | 28 | 25 | 4 |
| Ex. 4 | SY-Glyster TS-3S | SY-Glyster TS-5S | NIKKOL Decaglyn 5-SV | 0.37 | 0.62 | 0.50 | 29 | 28 | 25 | 4 |
| Ex. 5 | SY-Glyster TS-3S | SY-Glyster TS-5S | NIKKOL Decaglyn 5-SV | 0.37 | 0.62 | 0.50 | 29 | 28 | 25 | 4 |
| Comp. Ex. 1 | SY-Glyster TS-3S | - | - | 1.74 | - | - | 29 | - | - | - |

In Table 2, the amount of the dispersion stabilizer added indicates the amount added based on 100 parts by mass of the acrylic acid serving as the water-soluble ethylenically unsaturated monomer used in the first-stage polymerization.

**[Table 3]**

| | Properties of the water-absorbent resin particles | | | |
|---|---|---|---|---|
| | Median particle size (µm) | Uniformity | Yellowness index before heating | Yellowness index after heating |
| | (20M under) | (20M under) | (-) | (-) |
| Ex. 1 | 342 | 2.0 | 8 | 9 |
| Ex. 2 | 170 | 2.2 | 7 | 7 |
| Ex. 3 | 363 | 1.7 | 5 | 6 |
| Ex. 4 | 366 | 1.6 | 7 | 8 |
| Ex. 5 | 373 | 1.5 | 8 | 8 |
| Comp. Ex. 1 | 426 | 2.9 | 9 | 9 |

## Claims

1. A method for producing water-absorbent resin particles comprising the step of subjecting a water-soluble ethylenically unsaturated monomer to reversed-phase suspension polymerization in a hydrocarbon dispersion medium to obtain polymer particles,
wherein the reversed-phase suspension polymerization is performed in two or more multiple stages,
wherein the method comprises the step of agglomerating the polymer particles in the presence of a dispersion stabilizer, and
wherein two or more (poly)glycerol fatty acid esters having different precipitation temperatures when in the form of a 0.46% by mass heptane solution are used as the dispersion stabilizer.

2. The method according to claim 1, wherein a difference between the precipitation temperatures of a (poly)glycerol fatty acid ester having a highest precipitation temperature and a (poly)glycerol fatty acid ester having a lowest precipitation temperature of the two or more (poly)glycerol fatty acid esters is 15°C or less.

3. The method according to claim 1 or 2, wherein at least one of the (poly)glycerol fatty acid esters is hexaglyceryl tristearate, and
wherein an amount of the hexaglyceryl tristearate used is in a range of 0.2 parts by mass or more and 4.0 parts by mass or less per 100 parts by mass of the water-soluble ethylenically unsaturated monomer used in first-stage polymerization.

4. The method according to claim 3, wherein the dispersion stabilizer contains the hexaglyceryl tristearate and at least one of a (poly)glycerol fatty acid ester having a precipitation temperature higher than that of the hexaglyceryl tristearate and a (poly)glycerol fatty acid ester having a precipitation temperature lower than that of the hexaglyceryl tristearate, and
wherein an amount of each of the (poly)glycerol fatty acid ester having a precipitation temperature higher than that of the hexaglyceryl tristearate and the (poly)glycerol fatty acid ester having a precipitation temperature lower than that of the hexaglyceryl tristearate used is in a range of more than 0 parts by mass and 3.0 parts by mass or less per part by mass of the hexaglyceryl tristearate.

5. The method according to claim 4, wherein the dispersion stabilizer contains the hexaglyceryl tristearate, the (poly)glycerol fatty acid ester having a precipitation temperature higher than that of the hexaglyceryl tristearate, and the (poly)glycerol fatty acid ester having a precipitation temperature lower than that of the hexaglyceryl tristearate, and
wherein the amount of each of the (poly)glycerol fatty acid ester having a precipitation temperature higher than that of the hexaglyceryl tristearate and the (poly)glycerol fatty acid ester having a precipitation temperature lower than that of the hexaglyceryl tristearate used is more than 0 parts by mass and 2.0 parts by mass or less per part by mass of the hexaglyceryl tristearate.

6. Water-absorbent resin particles comprising polymer particles containing a water-soluble ethylenically unsaturated monomer as a monomer unit,
wherein the water-absorbent resin particles have a particle size distribution uniformity of 2.5 or less and contain (poly)glycerol fatty acid esters near surfaces of the water-absorbent resin particles.
